(19)

**Europäisches Patentamt**
**European Patent Office**
**Office européen des brevets**

(11)  **EP 2 533 143 A2**

(12)  **EUROPEAN PATENT APPLICATION**

(43) Date of publication:
**12.12.2012 Bulletin 2012/50**

(51) Int Cl.:
***G06F 3/048*** *(2006.01)*

(21) Application number: **12169833.6**

(22) Date of filing: **29.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2011 JP 2011127447**

(71) Applicant: **Sony Corporation**
**Tokyo 108-0075 (JP)**

(72) Inventors:
• **Noda, Takuro**
**Minato-ku, Tokyo 108-0075 (JP)**
• **Yamamoto, Kazuyuki**
**Minato-ku, Tokyo 108-0075 (JP)**

(74) Representative: **Turner, James Arthur**
**D Young & Co LLP**
**120 Holborn**
**London EC1N 2DY (GB)**

(54)  **Information processing apparatus, information processing method, and program**

(57)    There is provided an information processing apparatus including a detecting unit that detects a pinch operation of a user, and a control unit that determines a stereoscopic object as an object to be selected, when a pinch position by the detected pinch operation corresponds to a perceived position of the stereoscopic object by the user.

**FIG. 1**

**Description**

The present disclosure relates to an information processing apparatus, an information processing method, and a program.

At present, many information processing apparatuses are installed with a graphic user interface (GUI). Usually, the GUI displays a pointer that is shifted on a screen based on an operation by a user, and the user can select an icon or the like that is displayed on the screen, by pointing at an arbitrary position on the screen with this pointer.

Concerning such a display technology, Japanese Patent Application Laid-Open No. 2011-54117 discloses a technology that recognizes movement of hands in space of plural users based on a camera image, and displays plural pointers that are shifted following the movement of the hands of the users, for example.]

Further, in recent years, a display apparatus of a stereoscopic image has been attracting attention. The display apparatus of a stereoscopic image can display an object to be operated such as an icon and a thumbnail, as a stereoscopic object. The stereoscopic object is perceived by the user as if the stereoscopic object is actually present in space, unlike a two-dimensional image. Therefore, it is desirable to directly select a stereoscopic object in a similar manner to that of selecting an object that is actually present in space. However, according to the technology that uses the pointer described above, it has been difficult to realize a direct selection of a stereoscopic object.

Various respective aspects and features of the invention are defined in the appended claims. Combinations of features from the dependent claims may be combined with features of the independent claims as appropriate and not merely as explicitly set out in the claims.

In light of the foregoing, the present disclosure proposes an information processing apparatus, an information processing method, and a program that can directly select a three-dimensional image and that are novel and improved.

One embodiment of the present invention is directed to an image signal processing apparatus for selecting a desired stereoscopic object displayed on a display unit which three-dimensionally displays an image. The image signal processing apparatus comprises a determination control unit configured to determine a position of a pinch operation performed by a user, and a selection unit configured to select the desired stereoscopic object to be selected based on the position of the pinch operation by the user.

As explained above, according to the present disclosure, a three-dimensional image can be directly selected.

Embodiments of the invention will now be described with reference to the accompanying drawings, throughout which like parts are referred to by like references, and in which:

FIG. 1 is a view for explaining outline of an information processing apparatus according to the present embodiment;

FIG. 2 is a block configuration diagram of the information processing apparatus according to the present embodiment;

FIG. 3 is a schematic cross-sectional view for explaining a setting of a camera according to the present embodiment;

FIG. 4 is a view showing a space area of the information processing apparatus according to the present embodiment;

FIG. 5 is a flowchart showing a pinch operation detection process of a detecting unit according to the present embodiment;

FIG. 6 is a view for explaining a camera that photographs a pinch operation;

FIG. 7 is a view for explaining a detection example of a marker;

FIG. 8 is a view for explaining another detection example of a marker;

FIG. 9 is a view for explaining the position of a maker in a photographed image;

FIG. 10 is a perspective view for explaining an operation example 1;

FIG. 11 is a perspective view for explaining an operation example 2;

FIG. 12 is a view for explaining an inside and an outside of a space area in a z direction;

FIG. 13 is a schematic side view for explaining an operation example 3;

FIG. 14 is a view for explaining a display example of a transmission progress state in the operation example 3;

FIG. 15 is a perspective view for explaining an operation example 4;

FIG. 16 is a view for explaining an operation example when performing a reception stop in the operation example 4; and

FIG. 17 is a schematic side view for explaining an operation example 5.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Explanation will be performed in the following order.

1. Outline of the information processing apparatus according to the present embodiment

2. Details of the information processing apparatus according to the present embodiment

2-1. Configuration of the information processing apparatus

2-2. Detection process of pinch operation

2-3. Pinch operation examples

3. Conclusion

As explained above, the technology of the present disclosure explained in the present specification can be implemented by the embodiment indicated in the above items "1. Outline of the information processing apparatus according to the present embodiment" and "2. Details of the information processing apparatus according to the present embodiment". An information processing apparatus 10 according to the embodiment explained in the present specification includes:

A: a detecting unit (19) that detects a pinch operation by a user; and

B: a control unit (11) that determines that a stereoscopic object is an object to be selected, when a pinch position by the detected pinch operation corresponds to a perceived position of the stereoscopic object by the user.

<1. Outline of the information processing apparatus according to the present embodiment>

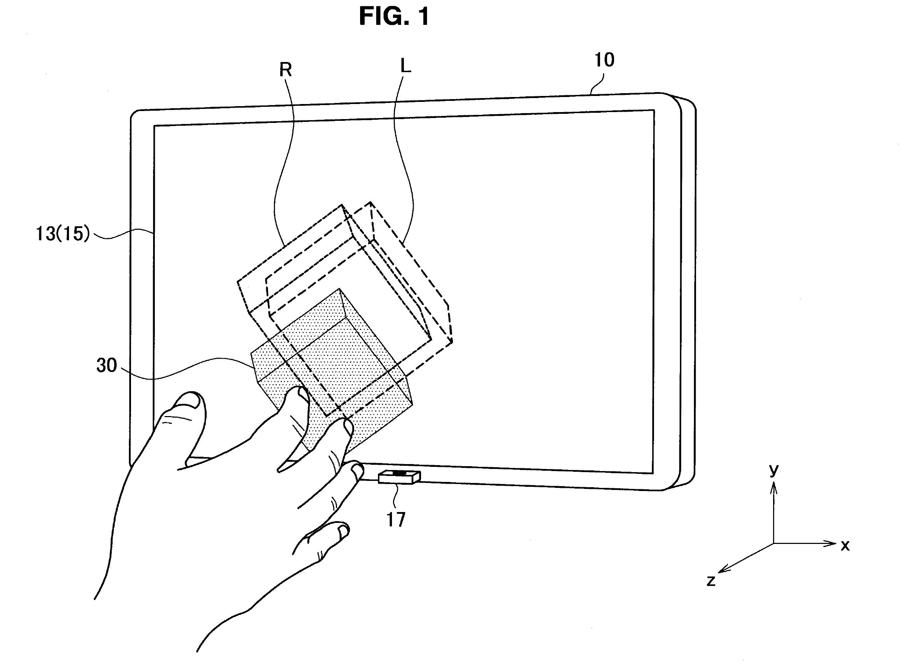

First, outline of the information processing apparatus 10 according to the embodiment of the present disclosure is explained with reference to FIG. 1. FIG. 1 is a view for explaining the outline of the information processing apparatus 10 according to the present embodiment. As shown in FIG. 1, the information processing apparatus 10 includes a display unit 13 and a camera 17. The information processing apparatus 10 according to the present disclosure is realized by a tablet computer as shown in FIG. 1, for example.

The information processing apparatus 10 according to the present embodiment provides a stereoscopic object that a user can three-dimensionally and visually recognize. As a system for watching a stereoscopic object, a binocular disparity system that enables the user to watch a left-eye object L and a right-eye object R that have a parallax is going to be popular. As this binocular disparity system, there are broadly two kinds of systems including a glass system that uses glasses and a naked-eye system that does not use glasses. The naked-eye system includes a lenticular screen system that separates light paths of the left-eye object L and the right-eye object R by arranging barrel fine lenses (lenticular lenses), and a parallax barrier system that separates light paths of the left-eye object L and the right-eye object R by a longitudinal slit (a parallax barrier).

The information processing apparatus 10 according to the present embodiment provides a stereoscopic object by causing the user to watch a binocular disparity image by the naked-eye system, as an example.

FIG. 1 shows the left-eye object L and the right-eye object R in the display unit 13, and shows a stereoscopic object 30 that the user perceives in front of these objects. The information processing apparatus 10 controls display of the stereoscopic object 30 according to a user operation in space.

The camera 17 included in the information processing apparatus 10 according to the present embodiment photographs the vicinity of the display unit 13. The information processing apparatus 10 detects the user operation in space based on an image photographed by the camera 17.

The information processing apparatus 10 may detect the user operation in space by using the operation input unit 15 that is integrated with the display unit 13. Alternatively, the information processing apparatus 10 may detect the user operation in space by using the operation input unit 15 and the camera 17, or may detect the user operation by using plural cameras and other sensor.

When the information processing apparatus 10 according to the present embodiment selects a stereoscopic object that is perceived to be actually present in space, the information processing apparatus 10 realizes selection of the stereoscopic object by a pinch operation as a user operation of directly selecting the stereoscopic object.

Specifically, when a pinch position by the pinch operation by the user corresponds to a perceived position of the stereoscopic object, the information processing apparatus 10 determines the stereoscopic object as an object to be selected. With this arrangement, the user can directly select the stereoscopic object by the pinch operation.

The outline of the information processing apparatus 10 according to the present embodiment has been explained above. Next, details of the information processing apparatus 10 according to the present embodiment are explained with reference to the drawings.

<2. Details of the information processing apparatus according to the present embodiment>

[2-1. Configuration of the information processing apparatus]

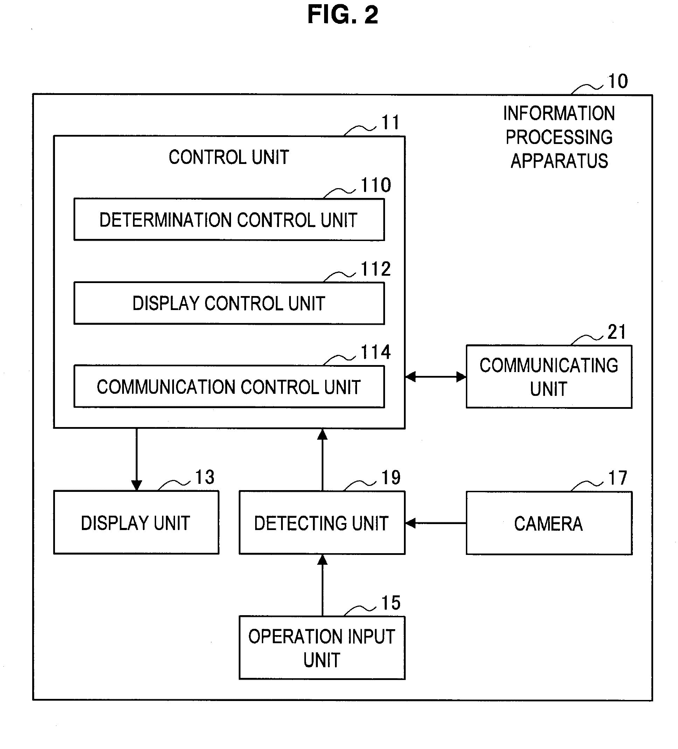

FIG. 2 is a block configuration diagram of the information processing apparatus 10 according to the present embodiment. As shown in FIG. 2, the information processing apparatus 10 includes a control unit 11, the display unit 13, an operation input unit 15, the camera 17, a detecting unit 19, and a communicating unit 21. Each configuration is explained below.

The control unit 11 controls each configuration of the information processing apparatus 10. Specifically, as shown in FIG. 2, the control unit 11 performs various controls by a determination control unit 110, a display control unit 112, and a communication control unit 114.

The determination control unit 110 detects a perceived position of the stereoscopic object by the user. The stereoscopic object generates a distortion and a positional deviation according to the position of the user. Therefore, the determination control unit 110 may recognize the position of the face of the user based on a photographed image of the face of the user, and detect a perceived position of the stereoscopic object by the user according to the recognized position of the face of the user, for example. The determination control unit 110 acquires information of a pinch position by a pinch operation by the user from the detecting unit 19. Then, the determination control unit 110 determines the stereoscopic object perceived by the user at a position that corresponds to the pinch position, as an object to be selected. The position that corresponds to the pinch position may be a position that matches the pinch position or may be a peripheral position of the pinch position.

The display control unit 112 has a function of generating an image to be displayed in the display unit 13. For example, the display control unit 112 generates a binocular image that has a parallax, to provide a stereoscopic object.

The display control unit 112 also has a function of changing an image to be displayed in the display unit 13. For example, the display control unit 112 may feed back to the pinch operation by the user, by changing a color of a stereoscopic object that the determination control unit 110 has determined as an object to be selected. Further, the display control unit 112 changes the position of the selected stereoscopic object according to a shift of the pinch position. With this arrangement, the user can perform an operation of shifting the pinched stereoscopic object forward and backward in a z direction perpendicular to the display unit 13, for example. Details of the display control by the display control unit 112 are explained later in [2-3. Pinch operation examples].

The communication control unit 114 performs a data transmission/reception by controlling the communicating unit 21. The communication control unit 114 may also control a transmission/reception according to a shift of the position of the stereoscopic object. A relationship between a perceived position of the stereoscopic object by the user and a transmission/reception control of data is explained in detail in [2-3. Pinch operation examples].

The display unit 13 displays data that is output from the display control unit 112. For example, the display unit 13 three-dimensionally displays an object by displaying a binocular image having a parallax. The object to be three-dimensionally displayed may be a photograph or a video, or may be an image of an operation button, an icon and the like. The display unit 13 may be a display apparatus such as a liquid crystal display (LCD) and an organic electroluminescence (EL) display.

The operation input unit 15 receives an operation instruction by the user, and outputs an operation content of the operation to the detecting unit 19. For example, the operation input unit 15 according to the present embodiment may be a proximity sensor that detects a user operation in space. Further, the operation input unit 15 may be a proximity touch panel that is provided integrally with the display unit 13.

The camera 17 is an image sensor that detects a user operation in space, and outputs a photographed image to the detecting unit 19. The camera 17 is set with a photographing direction such that the camera 17 can photograph the vicinity of the display unit 13. Information of an image angle and the photographing direction of the camera 17 may be stored in a storage unit (not shown).

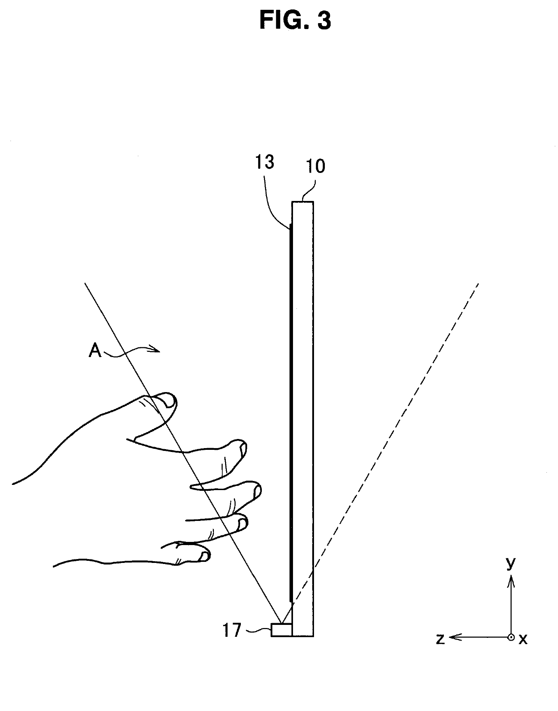

A detailed setting example of the camera 17 is explained with reference to FIG. 3. FIG. 3 is a schematic cross-sectional view for explaining a setting of the camera 17 according to the present embodiment. As shown in FIG. 3, the camera 17 is set such that the camera 17 photographs a space in front of the display unit 13 from below, for example. With this arrangement, the camera 17 can photograph a user operation in space in a photographing area A. The camera 17 may be installed in the information processing apparatus 10 or may be externally provided.

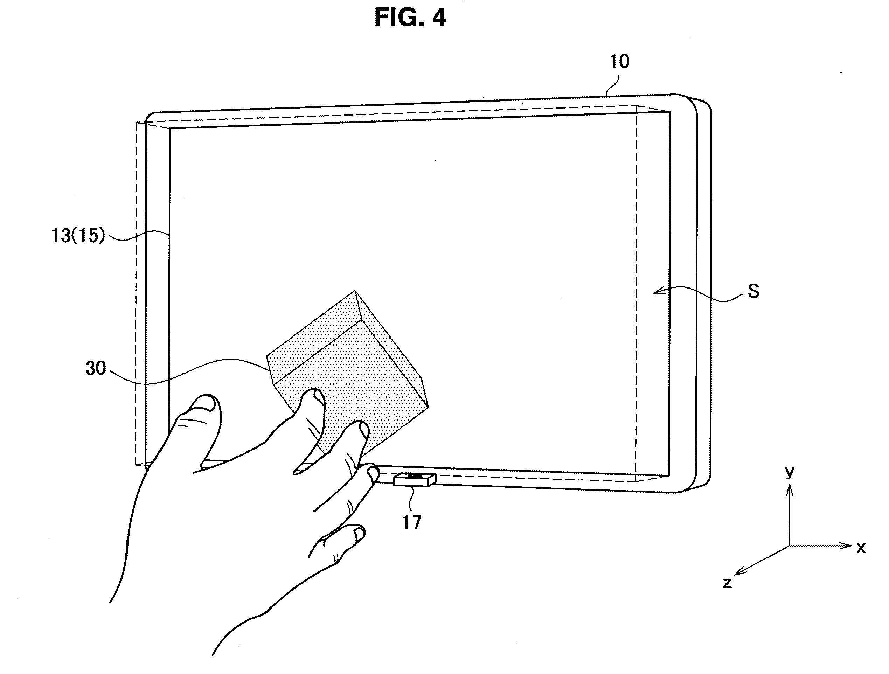

Although the width of the photographing area A in a z direction by the camera 17 is different at each position of the display unit 13 in a y direction as shown in FIG. 3, the image processing apparatus 10 according to the present embodiment may adjust a space area S in which a user operation can be detected, as shown in FIG. 4.

Although the width of the photographing area A in a z direction by the camera 17 is different at each position of the display unit 13 in a y direction as shown in FIG. 3, the image processing apparatus 10 according to the present embodiment may adjust a space area S in which a user operation can be detected, as shown in FIG. 4.

The detecting unit 19 detects a user operation in space based on an operation content that is input from the operation input unit 15 (for example, a result of detection by a proximity sensor) or a photographed image that is input from the camera 17. For example, the detecting unit 19 according to the present embodiment can detect presence or absence of a pinch operation and a pinch position. Detection of a pinch operation by the detecting unit 19 is explained in detail in [2-2. Detection process of pinch operation] described later.

The communicating unit 21 is a module that communicates with a communication terminal according to control by the communication control unit 114. Specifically, the communicating unit 21 includes a receiving unit that receives data from the communication terminal, and a transmitting unit that transmits data to the communication terminal. The communicating unit 21 may also transmit/receive data by near-distance wireless communications such as Wi-Fi and Bluetooth, and by short-distance wireless communications for performing communications at a short distance of a maximum 10 cm.

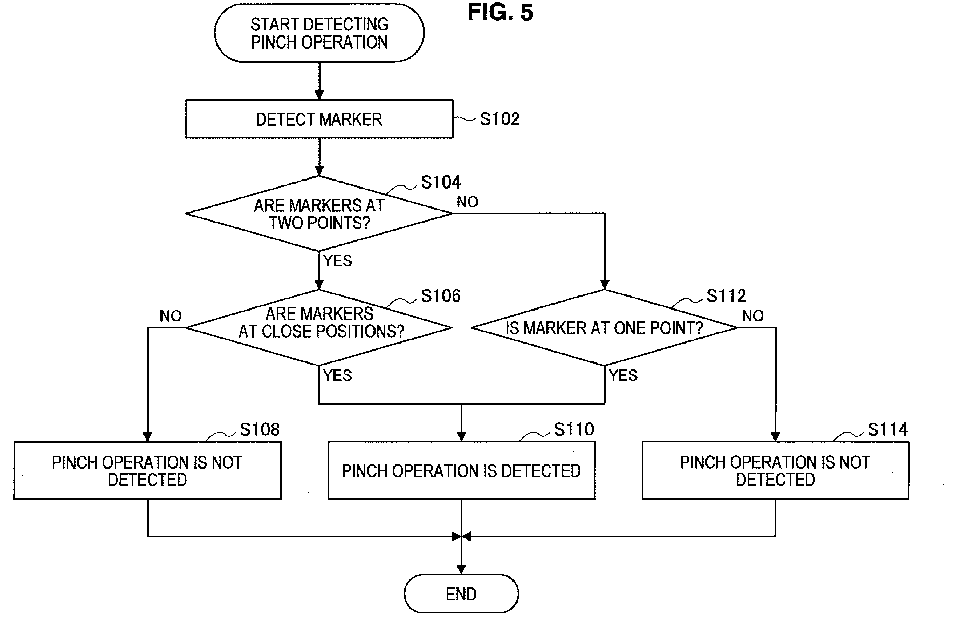

The configuration of the information processing apparatus 10 according to the present embodiment has been explained in detail above. Next, a detection process of a pinch operation by the detecting unit 19 is explained in detail with reference to FIG. 5.

[2-2. Detection process of pinch operation]

(Pinch operation)

FIG. 5 is a flowchart showing a pinch operation detection process of the detecting unit 19 according to the present embodiment. As shown in FIG. 5, first at step S102, the detecting unit 19 detects a marker from a photographed image that is input from the camera 17.

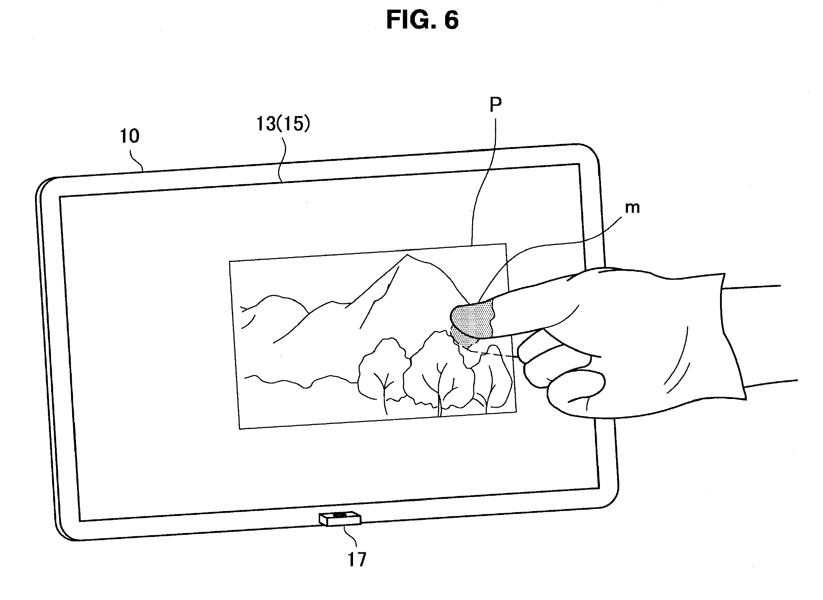

The photographed image that is input from the camera 17 is explained below with reference to FIG. 6. FIG. 6 is a view for explaining the camera 17 that photographs a pinch operation. As shown in FIG. 6, the camera 17 is provided below the information processing apparatus 10, and photographs, from below, a hand of the user who performs the pinch operation.

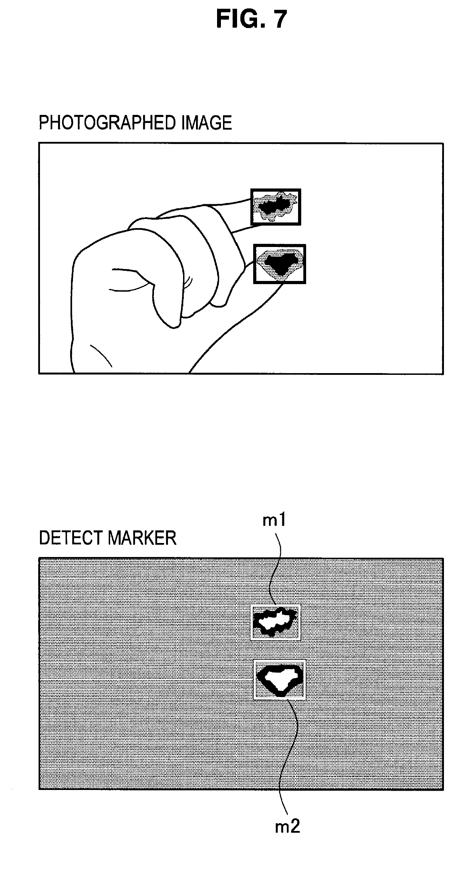

The user performs the operation by putting on a glove that is attached with markers m at fingertips, as shown in FIG. 7. Colors of the markers m and the glove are set as colors of clear contrast, such as a red color for the markers m and a white color for the glove. The camera 17 inputs a photographed image that is photographed from below to the detecting unit 19, as shown in FIG. 7.

Next, at step S 104, the detecting unit 19 determines whether markers detected from the photographed image are at two points. When the markers are at two points, the process proceeds to step S106. When the markers are not at two points, on the other hand, the process proceeds to step S112.

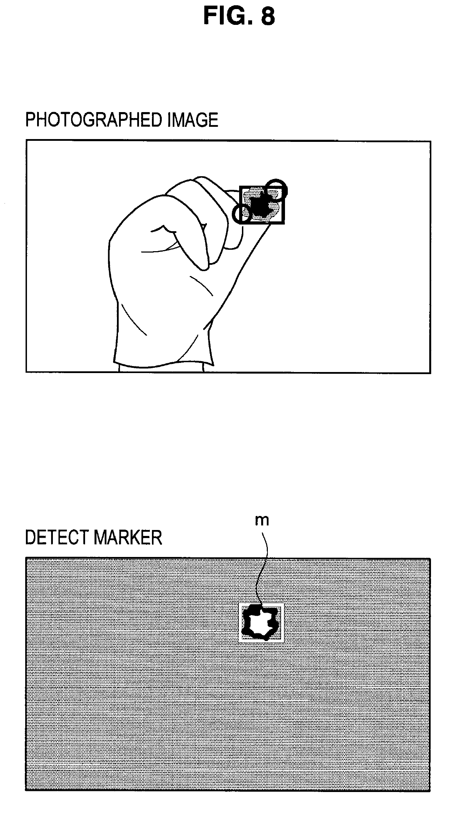

A detection example of a marker is explained below with reference to FIGS. 7 and 8. FIG. 7 is a view for explaining a detection example of a marker. As shown in FIG. 7, the detecting unit 19 detects marker portions that are in a red color at fingertips in the photographed image. In the example shown in FIG. 7, because the fingertips keep a distance, two points of a marker m1 and a marker m2 are detected.

FIG. 8 is a view for explaining another detection example of a marker. As shown in FIG. 8, the detecting unit 19 detects a marker portion that is in a red color at fingertips in the photographed image. In the example shown in FIG. 8, because the marker portion is pinched with fingertips, one point of a marker m is detected.

Next, at step S106, the detecting unit 19 determines whether positions of the detected markers at two positions are close to each other. For example, the detecting unit 19 determines whether the positions of the markers at two points are close to each other, based on whether a value of a distance between the markers at two points is smaller than a predetermined threshold value.

At step S106, when it is determined that the value of the distance between the markers at two points is smaller than the threshold value, the process proceeds to step S110, and the pinch operation is detected. In this way, even when markers are detected at two points, if positions of the markers at two points are close to each other, the detecting unit 19 detects the pinch operation.

On the other hand, at step S106, when it is determined that the value of the distance between the markers at two points is larger than the threshold value, the process proceeds to step S108, and the pinch operation is not detected.

Next, at step S112, the detecting unit 19 determines whether a marker detected is at one point. When a detected marker is at one point, the process proceeds to step S110, and a pinch operation is detected. On the other hand, when a detected marker is not at one point, the process proceeds to step S114, and a pinch operation is not detected.

As explained above, the detecting unit 19 performs a detection process of a pinch operation, based on the number of detected markers or a distance between plural markers. In the above example, although a detection process of a pinch operation is performed based on a marker at a fingertip, a pinch operation may be detected by determining a shape of a hand from a photographed image, without limiting the detection process of a pinch operation to a detection of a marker. Next, a calculation process of a pinch position by the pinch operation by the detecting unit 19 is explained.

After the pinch operation is detected in this way, the detecting unit 19 further calculates three-dimensional coordinates of the pinch position by the pinch operation. The pinch position is calculated by converting XY coordinates and the size of the marker in the photographed image detected from the photographed image into three-dimensional coordinates, for example.

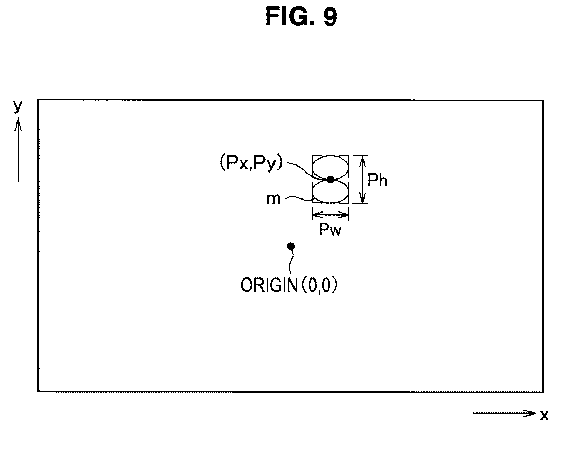

Calculation of the marker position is explained in detail with reference to FIG. 9. FIG. 9 is a view for explaining the position of the maker in the photographed image. As shown in FIG. 9, it is assumed that the position of the marker m in the photographed image is (Px, Py), a lateral width of the marker m is Pw, and a height of the marker m is Ph. It is assumed that Px and Pw are values obtained by normalizing by setting the lateral width of the photographed image as 1, and that Py and Ph are values obtained by normalizing by setting a longitudinal width of the photographed image as 1. The center of the photographed image is 0 for Px and Py.

It is assumed that in a coordinate system of stereoscopic space, an assumed size of a marker is W when y = 0, that a camera position in the coordinate system is Cy, that a vertical image angle of the camera is θv, and that a lateral image angle is θh. In this case, a position (Mx, My, Mz) of the marker in the stereoscopic space is calculated by the following equation.

$$Mx = W*Px/Pw$$

$$My = W/Pw*(0.5/\tan\theta h) + Cy$$

$$Mz = Py/(0.5/\tan\theta v)*Cy$$

An example of calculation of a pinch position by a pinch operation is explained above. Although a case where the detecting unit 19 detects a pinch position by a pinch operation based on a photographed image is explained in the above example, detection of a pinch position is not limited to the case based only on the photographed image. For example, the detecting unit 19 detects a pinch position based on an operation content that is input from the operation input unit 15, in addition to the photographed image that is input from the camera 17. Specifically, the detecting unit 19 first detects a pinch operation based on a photographed image, and next detects a pinch position based on an operation content (for example, a result of detection by a proximity sensor) from the operation input unit 15 that is realized by the proximity sensor or the like.

After the detecting unit 19 detects the pinch operation and calculates the pinch position by the process described above, the detecting unit 19 outputs results of these to the control unit 11. The control unit 11 performs various controls based on the detection results that are output from the detecting unit 19. Detailed operation examples of the pinch operation by the user are explained next.

[2-3. Pinch operation examples]

(Operation example 1)

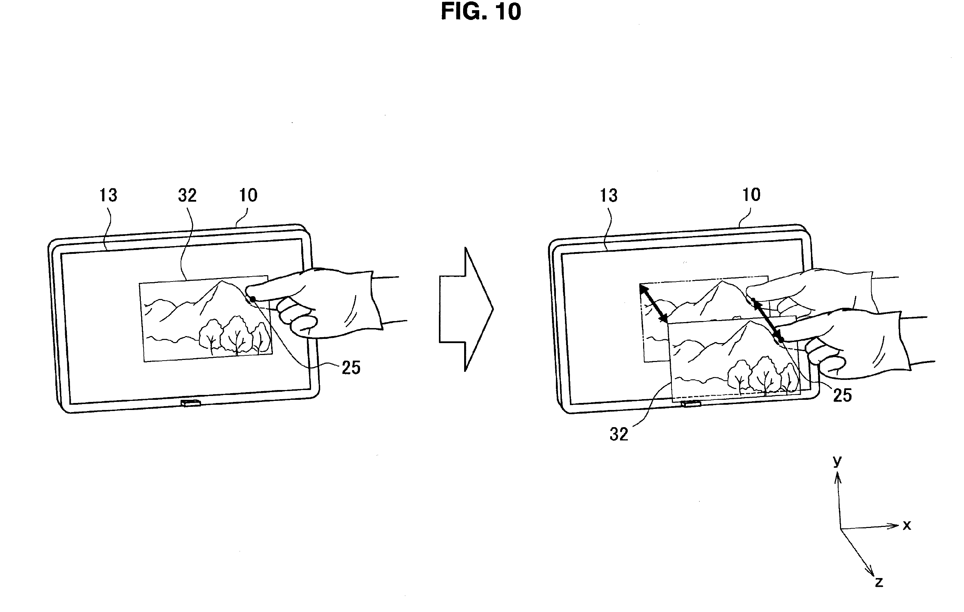

An operation example 1 is explained with reference to FIG. 10. FIG. 10 is a perspective view for explaining the operation example 1. As shown at a left side in FIG. 10, when the user performs a pinch operation, the determination control unit 110 determines, as an object to be selected, a photograph image 32 of a stereoscopic object that is perceived by the user at a position corresponding to a pinch position 25. As shown at a right side in FIG. 10, when the pinch position 25 is shifted forward and backward in the z direction, the display control unit 112 controls a binocular image that is displayed in the display unit 13 such that a perceived position of the photograph image 32 by the user is shifted according to the pinch position 25.

As a result, the user can adjust the position of a depth (the z direction) of the photograph image 32 that is perceived as a stereoscopic object. Further, the user can arbitrarily adjust the position of the photograph image 32 by shifting the pinch position in space to a vertical or lateral direction, an oblique direction, or in rotation, in addition to the z direction, in a pinched state.

(Operation example 2)

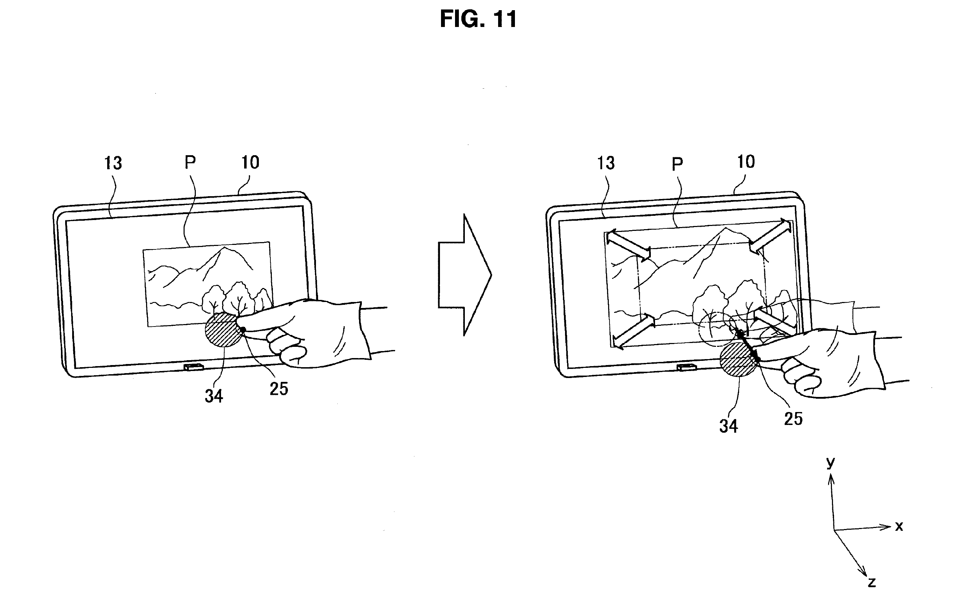

An operation example 2 is explained with reference to FIG. 11. FIG. 11 is a perspective view for explaining the operation example 2. As shown at a left side in FIG. 11, when the user performs a pinch operation, the determination control unit 110 determines, as an object to be selected, a zoom indicator 34 of a stereoscopic object that is perceived by the user at a position corresponding to the pinch position 25. As shown at a right side in FIG. 11, when the pinch position 25 is shifted forward and backward in the z direction, the display control unit 112 controls a binocular image that is displayed in the display unit 13 such that a perceived position of the zoom indicator 34 by the user is shifted according to the pinch position 25. Further, the display control unit 112 controls the size of a photograph image P according to a shift quantity of the pinch position 25 in the z direction.

With this arrangement, the user can indirectly control expansion and contraction of the photograph image P by controlling the position of the zoom indicator 34 in the z direction. The photograph image P may be a plane image or a stereoscopic image.

As explained above in the operation example 1 and the operation example 2, the information processing apparatus 10 according to the present embodiment can assign a specific position of a stereoscopic space by a pinch operation.

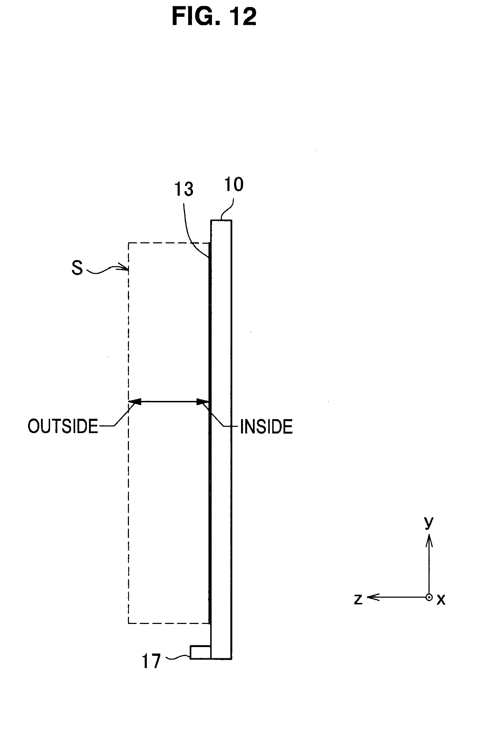

Next, an operation example that attaches significance to an inside and an outside of the space area S in the z direction as shown in FIG. 12 is explained. FIG. 12 is a view for explaining the inside and the outside of the space area S in the z direction. As shown in FIG. 12, the inside of the space area S as an area close to the display unit 13 in the z direction is attached with significance as an area in which data is stored inside the information processing apparatus 10. Further, the outside of the space area S as an area far from the display unit 13 is attached with significance as an area in which data is output to the outside of the information processing apparatus 10. An operation example 3 to an operation example 5 are explained in detail below.

(Operation example 3)

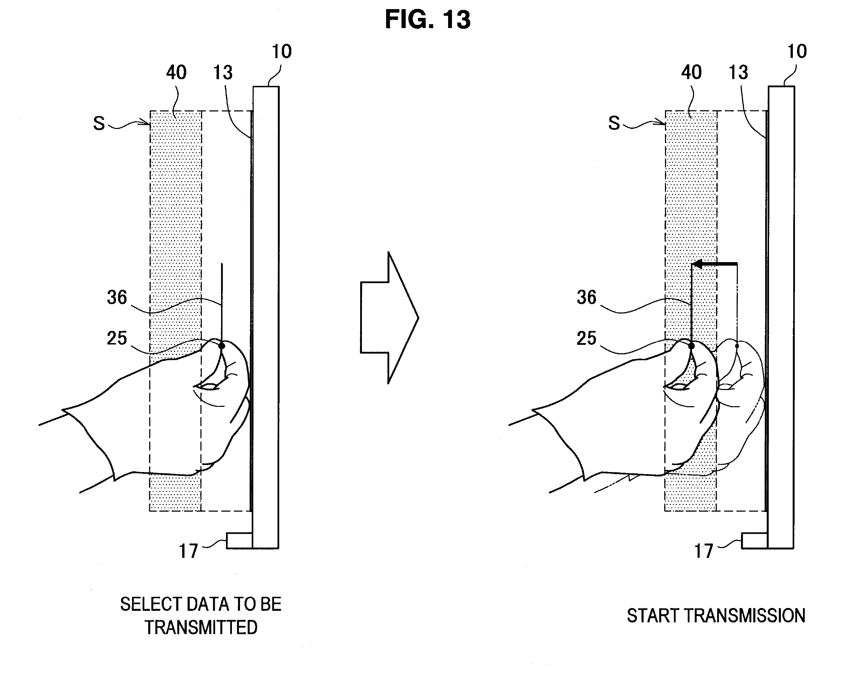

The operation example 3 is explained with reference to FIG. 13. FIG. 13 is a schematic side view for explaining the operation example 3. As shown in FIG. 13, an outside of the space area S is defined as a transmission area 40, as an area in which data is output to an outside of the information processing apparatus 10. In this case, as shown at a left side in FIG. 13, when the user performs a pinch operation, the determination control unit 110 determines, as an object to be selected, a photograph image 36 of the stereoscopic object that is perceived by the user at a position corresponding to the pinch position 25. As shown at a right side in FIG. 13, when the pinch position 25 is shifted to the transmission area 40, the display control unit 112 controls a binocular image that is displayed in the display unit 13 such that a perceived position of the photograph image 36 by the user is shifted according to the pinch position 25.

When the photograph image 36 is shifted to the transmission area 40 by the display control unit 112, the communication control unit 114 performs a control of transmitting data of the photograph image 36 to a transmission destination assigned in advance by the user.

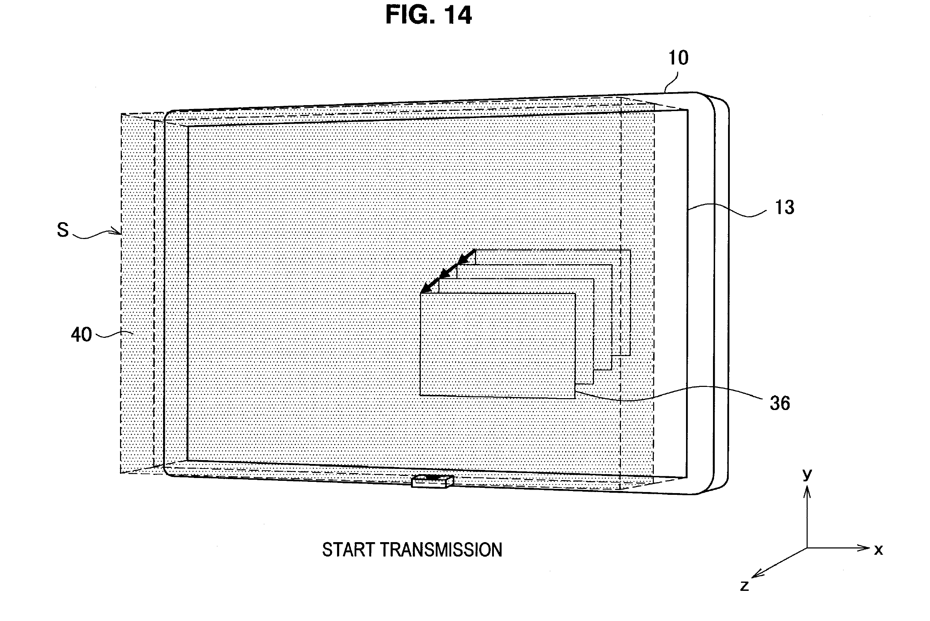

A display example of a transmission progress state of the photograph image 36 is explained with reference to FIG. 14. FIG. 14 is a view for explaining a display example of a transmission progress state in the operation example 3. As shown in FIG. 14, the display control unit 112 adjusts a perceived position by the user of the photograph image 36 that is placed in the transmission area 40 in the space area S, such that the perceived position gradually becomes far from the display unit 13 according to transmission-state information that is acquired from the communication control unit 114. In this way, the user can intuitively grasp the transmission progress state, by shifting the photograph image 36 to the outside of the space area S by the display control unit 112.

(Operation example 4)

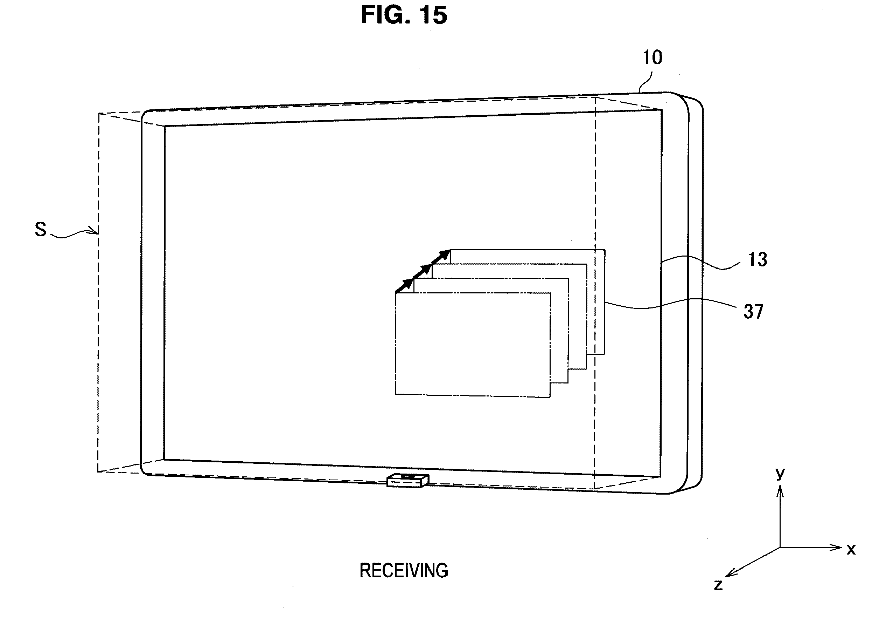

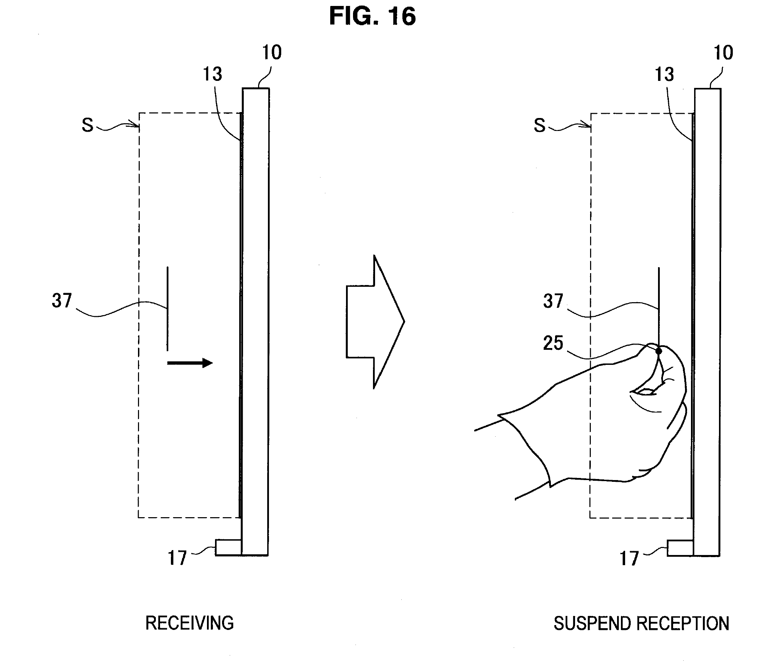

An operation example 4 is explained with reference to FIGS. 15 and 16. FIG. 15 is a perspective view for explaining the operation example 4. As shown in FIG. 15, when the information processing apparatus 10 receives data, the display control unit 112 shifts the perceived position of a stereoscopic object 37 by the user from the outside to the inside of the space area S according to a reception progress state that is acquired from the communication control unit 114. In this way, the user can intuitively accept the reception progress state, by shifting the stereoscopic object 37 to the inside of the space area S by the display control unit 112.

FIG. 16 is a view for explaining an operation example when performing a reception stop in the operation example 4. As shown at a left side in FIG. 16, the stereoscopic object 37 is gradually shifted to the inside of the space area S according to a reception progress state by the display control unit 112. At this time, as shown at a right side in FIG. 16, when the user performs a pinch operation, the determination control unit 110 determines, as an object to be selected, the stereoscopic object 37 that is perceived by the user at a position according to the pinch position 25.

Then, the display control unit 112 performs a control to stop the shift of the stereoscopic object 37 to be selected. Further, the communication control unit 114 suspends reception of data by controlling the communicating unit 21. Accordingly, the user can intuitively operate the reception stop. When the user thereafter releases the stereoscopic object 37, the communication control unit 114 can restart the reception of the data. When an operation of releasing the stereoscopic object 37 from the display unit 13 is performed, the communication control unit 114 can stop the reception.

(Operation example 5)

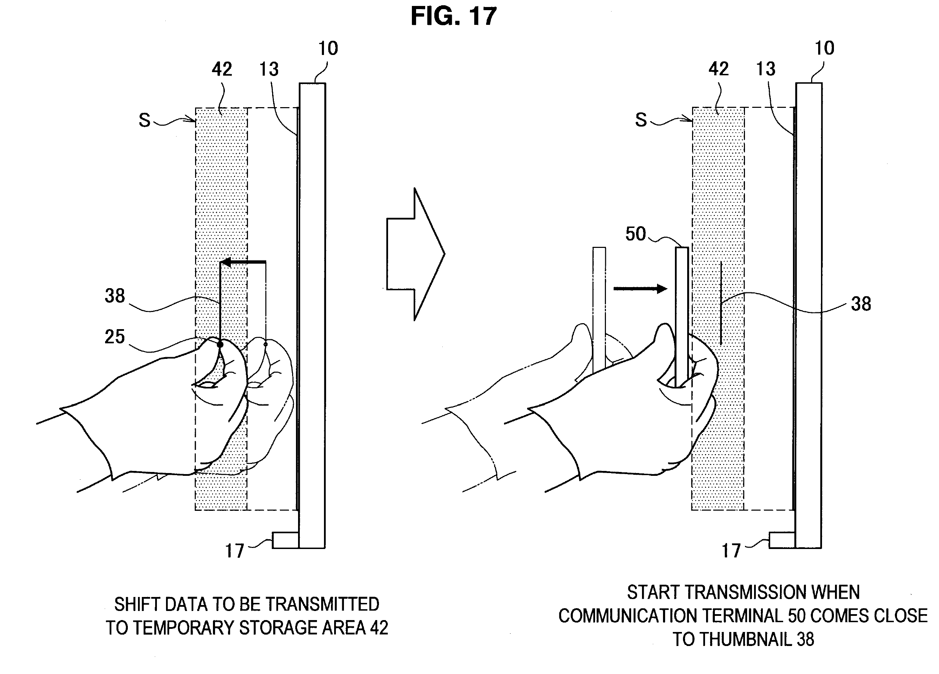

An operation example 5 is explained with reference to FIG. 17. FIG. 17 is a schematic side view for explaining the operation example 5. As shown in FIG. 17, an outside of the space area S is defined as a temporary storage area 42, as an area in which data is output to the outside of the information processing apparatus 10.

In this case, as shown at a left side in FIG. 17, when the user performs a pinch operation, the determination control unit 110 determines, as an object to be selected, a thumbnail 38 of the stereoscopic object that is perceived by the user at a position corresponding to the pinch position 25. When the pinch position 25 is shifted to the temporary storage area 42 that is attached with significance at the outside of the space area S, the display control unit 112 controls a binocular image to be displayed in the display unit 13 such that the perceived position of the thumbnail 38 by the user is shifted according to the pinch position 25.

As described above, when the thumbnail 38 is placed in the temporary storage area 42, the information processing apparatus 10 goes into a state of waiting for transmission of information that is indicated by the thumbnail 38. As shown at a right side in FIG. 17, when the communication control unit 114 detects that a communication terminal 50 comes close to the thumbnail 38 that is placed in the temporary storage area 42, the communication control unit 114 transmits information indicated by the thumbnail 38 to the communication terminal 50 by controlling the communicating unit 21. The communication control unit 114 may detect the communication terminal 50 by monitoring a connection state of near-distance wireless communications such as Bluetooth and Wi-Fi, and short-distance wireless communications for performing communications in a short distance of a maximum 10 cm.

<3. Conclusion>

As described above, the information processing apparatus 10 according to the embodiment of the present disclosure determines a stereoscopic object as an object to be selected, when a pinch position by a detected pinch operation of the user corresponds to a perceived position of the stereoscopic object by the user. With this arrangement, the user can directly select a three-dimensional image by the pinch operation.

It should be understood by those skilled in the art that various modifications, combinations, subcombinations and alterations may occur depending on design requirements and other factors insofar as they are within the scope of the appended claims or the equivalents thereof.

The display control unit 112 may change the degree of transparency of the stereoscopic object that is perceived at a pinch position, according to a distance between the pinch position and a display screen. Specifically, the display control unit 112 increases the degree of transparency of the stereoscopic object when the stereoscopic object becomes farther from the display unit 13 by a user operation. With this arrangement, the user can intuitively understand that the pinch position comes close to an outside of an operable range of the space area S.

Although an example that the information processing apparatus 10 according to the present disclosure is realized by a tablet computer has been explained in the above embodiment, the present technology is not limited to this example. For example, the information processing apparatus according to the present disclosure may be a control apparatus that mainly has the control unit 11, the detecting unit 19, and the communicating unit 21 that have been explained with reference to FIG. 2. In this case, such a control apparatus controls a display apparatus that mainly has the display unit 13 and the operation input unit 15. Such a display apparatus is externally attached with the camera 17. An information processing system that has such a control apparatus and such a display apparatus is also included in the present technology.

The information processing apparatus according to the present disclosure may be a head-mounted display. In this case, an operation in space by the user is photographed by a camera that is included in the head-mounted display. A detecting unit that the head-mounted display includes may calculate a pinch operation and a pinch position based on the photographed image.

Further, configurations of the information processing apparatus 10 according to the embodiment described above may be also realized by hardware configurations such as a central processing unit (CPU), a read only memory (ROM), and a random access memory (RAM).

Further, a computer program that exhibits functions equivalent to those of the configurations of the information processing apparatus 10 according to the embodiment described above can be also prepared. A recording medium that stores the computer program is also provided. Examples of the recording medium include a magnetic disc, an optical disc, a magneto optical disc, and a flash memory. Further, the computer program may be distributed via a network, for example, without using a recording medium.

Additionally, the present technology may also be configured as in the numbered clauses set out below.

(1) An image signal processing apparatus for selecting a desired stereoscopic object displayed on a display unit which three-dimensionally displays an image, comprising:

a determination control unit configured to determine a position of a pinch operation performed by a user; and
a selection unit configured to select the desired stereoscopic object to be selected based on the position of the pinch operation by the user.

(2) An image signal processing apparatus according to clause (1), further comprising,
a detecting unit configured to detect the pinch operation performed by the user.

(3) An image signal processing apparatus according to clause (1) or (2),
wherein the position of the pinch operation is relative to a display surface of the display unit.

(4) An image signal processing apparatus according to any one of clauses (1) to (3),
wherein the determination control unit detects a position of the stereoscopic object perceived by the user, and determines whether the perceived position of the stereoscopic object corresponds to the position of the pinch operation.

(5) An image signal processing apparatus according to any one of clauses (1) to (4),
wherein the determination control unit recognizes the position of a face of the user based on a picked up image of the face of the user, and detects the position of the stereoscopic object as perceived by the user according to the recognized position of the face of the user.

(6) An image signal processing apparatus according to any one of clauses (1) to (5), further comprising:

a display control unit configured to generate the displayed image, and to control a display position of the selected stereoscopic object according to a shift of the position of the pinch operation in three-dimensional directions.

(7) An image signal processing apparatus according to any one of clauses (1) to (6),
wherein the display position of the selected stereoscopic object is controlled by shifting the position of the pinch operation in a direction perpendicular to the display surface of the display unit, or a vertical or lateral direction, or an oblique direction, or in rotation.

(8) An image signal processing apparatus according to clause 6,
wherein the selected stereoscopic object exhibits a transparency, and
wherein the display control unit adjusts the degree of transparency of the stereoscopic object which is perceived at the position of the pinch operation according to a distance between the position of the pinch operation and the display surface of the display unit.

(9) An image signal processing apparatus according to clause 6,

wherein the selected stereoscopic object is shifted when the user performs the pinch operation; wherein when data is transmitted to the image signal processing apparatus from an external device, the display control unit stops the shifting of the stereoscopic object when the user performs a pinch operation on the selected stereoscopic object, and processing of the transmitted data is suspended, and

wherein when data processing is suspended and the user stops the pinch operation on the selected the stereoscopic object, data processing is restarted.

(10) An image signal processing apparatus according to clause 6, wherein data of an image of the stereoscopic object is transmitted to a transmission destination previously assigned by the user when the user performs the pinch operation of the stereoscopic object and the display control unit controls a position of a perceived object to move from inside of a space area to outside of the space area according to the pinch operation, and wherein when an external communication device is detected in the vicinity of a temporary storage area which is positioned at the outside of the space area, information indicated by the stereoscopic object positioned in the temporary storage area is transmitted to the detected external communication device.

**Claims**

1. An image signal processing apparatus for selecting a desired stereoscopic object displayed on a display unit which three-dimensionally displays an image, comprising:

   a determination control unit configured to determine a position of a pinch operation performed by a user; and
   a selection unit configured to select the desired stereoscopic object to be selected based on the position of the pinch operation by the user.

2. An image signal processing apparatus according to claim 1, further comprising, a detecting unit configured to detect the pinch operation performed by the user.

3. An image signal processing apparatus according to claim 1, wherein the position of the pinch operation is relative to a display surface of the display unit.

4. An image signal processing apparatus according to claim 1, wherein the determination control unit detects a position of the stereoscopic object perceived by the user, and determines whether the perceived position of the stereoscopic object corresponds to the position of the pinch operation.

5. An image signal processing apparatus according to claim 4, wherein the determination control unit recognizes the position of a face of the user based on a picked up image of the face of the user, and detects the position of the stereoscopic object as perceived by the user according to the recognized position of the face of the user.

6. An image signal processing apparatus according to claim 1, further comprising:

   a display control unit configured to generate the displayed image, and to control a display position of the selected stereoscopic object according to a shift of the position of the pinch operation in three-dimensional directions.

7. An image signal processing apparatus according to claim 6, wherein the display position of the selected stereoscopic object is controlled by shifting the position of the pinch operation in a direction perpendicular to the display surface of the display unit, or a vertical or lateral direction, or an oblique direction, or in rotation.

8. An image signal processing apparatus according to claim 2, further comprising, an operation input unit configured to receive an operation instruction from the user by detecting a user operation in space, and output the operation instruction to the detecting unit; and an image pick up unit configured to pick up an image in a space in front of the display unit from below, and output the picked up image to the detecting unit.

9. An image signal processing apparatus according to claim 8, wherein the detecting unit detects markers from the picked up image, and wherein the pinch operation is detected when the markers are at least one point.

10. An image signal processing apparatus according to claim 9, wherein the pinch operation is detected when the markers are at two points and a value of a distance between the markers at said two points is less than a predetermined threshold value.

11. An image signal processing apparatus according to claim 9, wherein the position of the pinch operation is calculated by converting positions in two-dimensional coordinates and sizes of the markers in the picked up image into three-dimensional coordinates.

**12.** An image signal processing apparatus according to claim 6,
wherein the determination control unit determines a zoom indicator which is perceived at a position corresponding to the position of the pinch operation; and wherein the display control unit controls the displayed image to shift the position of the perceived zoom indicator in a direction according to the position of the pinch operation to correspondingly expand and contract the picked up image.

**13.** An image signal processing apparatus according to claim 6,
wherein data of an image of the stereoscopic object is transmitted to a transmission destination previously assigned by the user when the user performs the pinch operation of the stereoscopic object and the display control unit controls a position of a perceived object to move from inside of a space area to outside of the space area according to the pinch operation.

**14.** A method for selecting a desired stereoscopic object displayed on a display unit which three-dimensionally displays an image, comprising the steps of:

determining a position of a pinch operation performed by a user; and
selecting the desired stereoscopic objected to be selected based on the position of the pinch operation by the user.

**15.** A non-transitory computer-readable medium storing a computer program that when executed on a computer causes to select a desired stereoscopic object displayed on a display unit which three-dimensionally displays an image, the program comprising the steps of:

determining a position of a pinch operation performed by a user; and
selecting the desired stereoscopic objected to be selected based on the position of the pinch operation by the user.

# FIG. 1

EP 2 533 143 A2

# FIG. 2

~ 10

INFORMATION
PROCESSING
APPARATUS

~ 11

CONTROL UNIT

~ 110

DETERMINATION CONTROL UNIT

~ 112

DISPLAY CONTROL UNIT

~ 114

COMMUNICATION CONTROL UNIT

~ 21

COMMUNICATING UNIT

~ 13

DISPLAY UNIT

~ 19

DETECTING UNIT

~ 17

CAMERA

~ 15

OPERATION INPUT UNIT

# FIG. 3

# FIG. 4

EP 2 533 143 A2

**FIG. 5**

START DETECTING PINCH OPERATION

↓

DETECT MARKER ～ S102

↓

S104 — ARE MARKERS AT TWO POINTS? — NO

YES ↓

S106 — ARE MARKERS AT CLOSE POSITIONS? — NO

S112 — IS MARKER AT ONE POINT? — NO

YES ↓ (S106)

YES ↓ (S112)

S108 — PINCH OPERATION IS NOT DETECTED

S110 — PINCH OPERATION IS DETECTED

S114 — PINCH OPERATION IS NOT DETECTED

↓

END

EP 2 533 143 A2

**FIG. 6**

# FIG. 7

PHOTOGRAPHED IMAGE

m1

DETECT MARKER

m2

# FIG. 8

PHOTOGRAPHED IMAGE

DETECT MARKER

m

# FIG. 9

FIG. 10

EP 2 533 143 A2

FIG. 11

FIG. 12

# FIG. 13

SELECT DATA TO BE
TRANSMITTED

START TRANSMISSION

EP 2 533 143 A2

**FIG. 14**

START TRANSMISSION

**FIG. 15**

RECEIVING

EP 2 533 143 A2

## FIG. 16

RECEIVING

SUSPEND RECEPTION

EP 2 533 143 A2

# FIG. 17

SHIFT DATA TO BE TRANSMITTED
TO TEMPORARY STORAGE AREA 42

START TRANSMISSION WHEN
COMMUNICATION TERMINAL 50 COMES CLOSE
TO THUMBNAIL 38

EP 2 533 143 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011054117 A